Europäisches Patentamt

European Patent Office

Office européen des brevets

(11) Veröffentlichungsnummer: **0 116 840**
A1

# (12) EUROPÄISCHE PATENTANMELDUNG

(21) Anmeldenummer: 84100285.0

(22) Anmeldetag: 12.01.84

(51) Int. Cl.³: **G 01 K 11/12**

(30) Priorität: 14.01.83 DD 247255

(43) Veröffentlichungstag der Anmeldung:
29.08.84 Patentblatt 84/35

(84) Benannte Vertragsstaaten:
DE FR GB IT SE

(71) Anmelder: Akademie der Wissenschaften der DDR
Rudower Chaussee 5
DDR-1199 Berlin(DD)

(72) Erfinder: Donecker, Jörg, Dr. Dipl.-Phys.
Oberspreestrasse 24d
DD-1190 Berlin(DD)

(72) Erfinder: Hoier, Bernhard, Dr. Dipl.-Ing.
Egon-Schultz-Strasse 70
DD-1040 Berlin(DD)

(72) Erfinder: Knöschce, Wolfgang, Dipl.-Phys
Karl-Pocern-Strasse 12
DD-1162 Berlin(DD)

(74) Vertreter: Patentanwälte Beetz sen. - Beetz jun. Timpe -
Siegfried - Schmitt-Fumian
Steinsdorfstrasse 10
D-8000 München 22(DE)

(54) Temperaturmessfühler mit optischem Ausgang.

(57) Die Erfindung betrifft einen nichtmetallischen Meßfühler mit optischem Ausgang, der Über- oder Unterschreitung vorgegebener Temperaturschwellwerte signalisiert. Ziel der Erfindung ist ein Temperaturschwellwertmelder mit optischem Ausgang, der keine aufwendige Auswerteschaltung benötigt und für verschiedene Temperaturen mit geringem technologischen Aufwand herstellbar ist. Aufgabe ist es, einen Meßfühler mit optischem Ausgang anzugeben, dessen Transmission sich bei Schwellwert-über- oder -unterschreitung drastisch ändert. Die Aufgabe wird dadurch gelöst, daß der Meßfühler als Lichtleiter ausgebildet ist und in einem Kapillarrohr eine Substanz enthält, die bei Schwellwertüber- oder -unterschreitung thermodynamische Phasengrenzen ausbildet. Mehrere Meßfühler lassen sich zu einer Meßkette hintereinanderschalten.

EP 0 116 840 A1

Temperaturmeßfühler mit optischem Ausgang

Die Erfindung betrifft einen nichtmetallischen Meßfühler mit optischem Ausgang, der unabhängig von Umgebungseinflüssen ein Über- und Unterschreiten vorgegebener Temperaturschwellwerte an der Meßstelle signalisiert und zur Hintereinanderschaltung innerhalb einer optischen Meßkette geeignet ist.

Viele Temperaturmeßgeräte beruhen auf elektrischen Meßprinzipien und erfordern demzufolge entsprechende Zuleitungen zur Meßstelle. Als problematisch erweist sich ihr Einsatz jedoch in starken elektromagnetischen Feldern, bei Potentialtrennung, Explosionsgefahr, in korrodierender Umgebung usw. Aus diesem Grunde werden Meßfühler mit optischen Ausgangssignalen verwendet, wobei die Signale über Lichtleiter weiter- und einem lichtelektrischen Empfänger zugeleitet werden.

Als Meßeffekt dienen kontinuierliche Einflüsse der Temperatur auf die optischen Eigenschaften des Meßfühlermaterials, wie z.B. die Temperaturverschiebung der Absorptionskante (DE-OS 2 632 633), die temperaturbedingte Änderung der Brechzahl (DE-OS 2 941 677, US-PS 3 672 221, US-PS 4 316 388) und die Temperaturabhängigkeit der Doppelbrechung (US-PS 4 215 576, US-PS 4 140 393). Anstelle eines gesonderten Meßfühlers kann auch der Lichtleiter selbst auf die Meßgröße empfindlich sein und stellt dann gleichzeitig die hin- und rückführende Leitung und den Meßfühler dar (US-PS 4 316 388, US-PS 3 045 085).

Die amplitudenanaloge Messung von optischen Strahlungsintensitäten ist im Vergleich zu derjenigen elektrischer Größen mit einer relativ großen Ungenauigkeit behaftet. Verbesserungen der Genauigkeit wurden deshalb durch Verwendung von Referenzkanälen angestrebt (US-PS 4 111 050, US-PS 4 203 326, EP 0 050 306).

Bei vielen Überwachungsaufgaben kommt es aber nicht auf die kontinuierliche Messung der Temperatur, sondern auf die Signalisierung der Über- oder Unterschreitung eines Schwellwertes an. Da hierzu eine Ja-Nein-Aussage erforderlich ist, sind mehrkanalige Anordnungen mit einem zu großen Aufwand verbunden.

In EP 37 266 wird ein Schwellwertmelder vorgestellt, aufgebaut als Lichtleiter aus mehreren Schichten von Materialien unterschiedlicher Brechungsindizes. Bei Erreichen des Schwellwertes werden die Brechungsindizes benachbarter Schichten gleich, wodurch das Licht auskoppelt und nicht mehr weitergeleitet wird. Die Schichten bestehen aus Polymeren oder organischen Flüssigkeiten. Ein Hintereinanderschalten mehrerer Meßfühler ist vorgesehen.

Ziel der Erfindung ist ein Temperaturschwellwertmelder mit optischem Ausgang, der keine aufwendige Auswerteschaltung benötigt und für eine Vielzahl verschiedener Temperaturen mit geringem technologischem Aufwand herstellbar ist.

Die Aufgabe der Erfindung besteht darin, einen konstruktiv einfachen Meßfühler mit optischem Ausgang anzugeben, dessen Transmission sich bei einer Schwellwertüber- oder -unterschreitung drastisch ändert. Es sollen mehrere Meßfühler zu einer Meßkette zusammengeschaltet werden können.

Erfindungsgemäß wird diese Aufgabe dadurch gelöst, daß der Meßfühler als Lichtleiter ausgebildet ist und aus einem Kapillarrohr besteht, das eine Substanz enthält, deren Brechzahl vorteilhaft größer als die des sie umgebenden Mantels ist, damit Totalreflexion erreicht wird.

In das eine Ende des Meßfühler-Röhrchens wird Licht über einen Lichtleiter eingekoppelt und zum anderen Ende weitergeleitet.

Hier wird es von einem weiteren Lichtleiter aufgenommen und einem lichtelektrischen Empfänger zugeführt.

Beim Über- oder Unterschreiten des Temperaturschwellwertes bilden sich im Meßfühler thermodynamische Phasengrenzen fest-flüssig oder flüssig-gasförmig aus oder diese verschwinden. Ähnlich starke Transmissionsänderungen können durch Ausscheidungsvorgänge fester Phasen, Entmischungen in der Flüssigkeit oder durch Kondensation von Gasen hervorgerufen werden. Je nach der verwendeten Substanz ist der thermodynamische Phasenübergang reversibel oder irreversibel. Es können mehrere erfindungsgemäße Meßfühler zu einer Meßkette vereinigt werden, wobei innerhalb einer Meßkette die Kapillarröhrchen der einzelnen Meßfühler mit unterschiedlichen Substanzen gefüllt sein können, wodurch sich das Schwellwertspektrum erweitert.

In einem Beispiel besteht der Meßfühler aus einer Kapillare aus Quarzglas, die mit Bromnaphthalin gefüllt ist. In beide Enden der Kapillare ist ein Lichtleiter eingeführt und mit der Kapillare verbunden. Wegen der hohen Brechzahl der Flüssigkeit relativ zu der des Glases kann das über einen der Lichtleiter in die Kapillare eingestrahlte Licht den mit Bromnaphthalin gefüllten Kern der Kapillare nicht verlassen, wenn es oberhalb des Grenzwinkels der Totalreflexion auf die innere Kapillarwandung trifft, und wird so zum anderen Lichtleiter weitergeleitet.

Wird ein beliebiger Teil der Kapillare über den Siedepunkt des Bromnaphthalins erwärmt, so bildet sich in der Kapillare eine Dampfblase, die eine nahezu vollständige Unterbrechung des Lichtstromes bewirkt. Die Strahlung tritt z.T. am Ort der Blase aus der Kapillare aus und ermöglicht es, durch direkte Beobachtung oder zusätzlich angebrachte Lichtleiter diejenige Stelle zu orten, an der eine Schwellwertüberschreitung eingetreten ist. Ein anderer Teil der Strahlung wird in den einkoppelnden Lichtleiter zurückreflektiert. Nach entsprechender Eichung kann aus der zurückreflektierten Strahlungsintensität auf die Entfernung der Blase geschlossen werden. Je nach den Bedingungen an der Meßstelle bilden sich die Blasen wieder zurück oder bleiben längere Zeit erhalten.

Ebenso tritt durch Kühlung der Kapillare unter den Erstarrungspunkt des Bromnaphthalins eine Unterbrechung des Lichtstromes ein.

Patentansprüche

1. Temperaturmeßfühler mit optischem Ausgang, gekennzeichnet dadurch, daß er aus einem als Kapillarrohr ausgebildeten Lichtleiter besteht, in dem sich eine Substanz befindet, in der sich bei Schwellwertüber- oder -unterschreitung eine oder mehrere Phasengrenzflächen ausbilden, die die Transmission durch den Lichtleiter drastisch verändern.

2. Temperaturmeßfühler nach Anspruch 1, gekennzeichnet dadurch, daß die Phasengrenzfläche dem Phasenübergang flüssig-gasförmig zugehörig ist.

3. Temperaturmeßfühler nach Anspruch 1, gekennzeichnet dadurch, daß die Phasengrenzfläche dem Phasenübergang fest-flüssig zugehörig ist.

4. Temperaturmeßfühler nach Anspruch 1, gekennzeichnet dadurch, daß die Phasengrenzfläche einem Phasenübergang flüssigflüssig zugehörig ist.

5. Temperaturmeßfühler nach Anspruch 1, gekennzeichnet dadurch, daß die Phasengrenzfläche einem Phasenübergang festgasförmig zugehörig ist.

6. Temperaturmeßfühler nach Anspruch 1, gekennzeichnet dadurch, daß die Phasengrenzfläche einem polymorphen Phasenübergang im Festkörper zugehörig ist.

7. Temperaturmeßfühler nach Anspruch 1, gekennzeichnet dadurch, daß mehrere Meßfühler innerhalb einer Lichtleiter-Meßkette hintereinandergeschaltet sind.

8. Temperaturmeßfühler nach Anspruch 7, gekennzeichnet dadurch, daß innerhalb einer Meßkette die einzelnen Meßfühler voneinander verschiedene transmissionsändernde Substanzen enthalten.

9. Temperaturmeßfühler nach Anspruch 1, gekennzeichnet dadurch, daß die Stelle der Schwellwertüber- oder -unterschreitung optisch feststellbar ist.

Europäisches
Patentamt

EUROPÄISCHER RECHERCHENBERICHT

0116840
Nummer der Anmeldung

EP  84 10 0285

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 349 282  (R.W. NORFOLK) <br> * Figur 3; Spalte 6, Zeilen 46-54 * | 1 | G 01 K   11/12 |
| A | US-A-3 782 195  (J.S. MEEK u.a.) <br> * Spalte 2, Zeilen 39-42 * | 1 | |

RECHERCHIERTE SACHGEBIETE (Int. Cl. ³)

G 01 K

Der vorliegende Recherchenbericht wurde für alle Patentansprüche erstellt.

| Recherchenort | Abschlußdatum der Recherche | Prüfer |
|---|---|---|
| DEN HAAG | 27-04-1984 | MIELKE W |